(19) **Europäisches Patentamt**
**European Patent Office**
**Office européen des brevets**

(11) **EP 3 653 658 A1**

(12) **EUROPEAN PATENT APPLICATION**

(43) Date of publication:
**20.05.2020 Bulletin 2020/21**

(21) Application number: **18206647.2**

(22) Date of filing: **16.11.2018**

(51) Int Cl.:
*C08G 18/62* (2006.01)     *C08G 18/76* (2006.01)
*C08G 18/40* (2006.01)     *C08G 18/42* (2006.01)
*C09J 175/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Henkel AG & Co. KGaA**
**40589 Düsseldorf (DE)**

(72) Inventors:
• **Picon Miranda, Vanessa Alexandra**
  **40599 Düsseldorf (DE)**
• **Blodau, Marcel**
  **47807 Krefeld (DE)**
• **Meckel-Jonas, Claudia**
  **40597 Düsseldorf (DE)**

(54) **THERMOPLASTIC POLYURETHANE**

(57)     The present invention refers to a thermoplastic polyurethane obtainable from a composition comprising at least one linear polyester polyol and at least one aliphatic polyol as well as a solvent-free adhesive composition comprising the inventive thermoplastic polyurethane.

EP 3 653 658 A1

**Description**

The present invention refers to a thermoplastic polyurethane obtainable from a composition comprising at least one linear polyester polyol and at least one aliphatic polyol as well as to a solvent-free adhesive composition comprising the inventive thermoplastic polyurethane.

The amount of waste produced worldwide and the strain placed on the environment have become one of the main topics in today's society. In the course of the ongoing discussion on sustainability, linked to the catchword of "carbon footprint", the aim is to reduce the amount of waste material and to develop and improve eco-friendly methods of production.

A major part of the accumulating waste includes food packaging. Apart from the difficulties encountered by recycling the materials used in food packaging, the processes of production are very costly in terms of energy and resources. Although efforts are being made to replace petro-based materials by materials obtained from renewable sources, a lot of potential for improvement also lies within the optimization of the production processes.

Solvent-free adhesives on basis of polyurethane are widely used in the production of flexible packaging such as bags of chips and the like. However, solvent-free polyurethane adhesives have so far been found to be lacking in other fields, such as sealable packaging, due to poor adhesion. Although it is known that certain additives can improve the adhesive properties of polyurethane adhesives, most of them were found to be incompatible with solvent-free applications. Therefore, there still exists the need for solvent-free adhesive composition suitable as heat sealing lacquers.

EP 2 944 660 relates to a thermoplastic polyurethane wherein the thermoplastic polyurethane is obtainable by a method comprising the steps of a) reacting a mixture comprising at least one polyester polyol and at least one polyisocyanate and b) reacting the reaction product of step a) with at least one substituted or unsubstituted diol which contains at least a primary and a secondary OH group.

WO 2016/026807 discloses polyurethanes obtainable by reaction of a) polyisocyanates A selected from optionally modified methanediphenyl 4,4'-diisocyanate, homologues of methanediphenyl 4,4'-diisocyanate containing a larger number of rings, prepolymers based on methanediphenyl 4,4'-diisocyanate and containing isocyanate groups, and mixtures thereof, b) compounds having at least two hydrogen atoms reactive towards isocyanate groups, containing b1) block copolymers of a polybutadienol and a cyclic ester as component B, and b2) diols as low-molecular-weight chain extenders and optionally triols as crosslinking agents with molar mass from 62 to 500 g/mol as component B2, c) optionally other polymeric compounds C having at least two hydrogen atoms reactive towards isocyanates, d) optionally catalysts D, e) optionally water E, f) optionally physical blowing agents F, g) optionally other auxiliaries and/or additives G.

WO 2016/124499 polyurethane laminating adhesives, methods for producing a multilayer laminate by laminating at least two films with a polyurethane laminating adhesive, and multilayer laminates obtainable by these methods wherein the polyurethane laminating adhesive comprises an NCO-terminated polyurethane prepolymer obtainable by reacting a polyol mixture comprising: 0.1 to 20.0 wt% relative to the total weight of the polyol mixture of at least one polybutadiene polyol; and 5.0 to 99.9 wt% relative to the total weight of the polyol mixture of at least one polyether polyol, wherein the at least one polyether polyol comprises at least one polyether polyol with a number average molecular weight $M_n$ in the range of >1000 g/mol to 10000 g/mol; with at least one polyisocyanate, wherein the at least one polyisocyanate is used in an amount such that the isocyanate groups are present in molar excess relative to the hydroxyl groups of the polyol mixture.

In light of the efforts described in the prior art, the object of the present lies in the provision of a solvent-free adhesive composition which can be used as heat sealing lacquer and which shows good adhesion on non-treated substrates.

It was surprisingly found that the above object is solved by employing a thermoplastic polyurethane which is obtainable from a composition comprising at least one linear polyester polyol and at least one aliphatic polyol in heat sealing applications.

A first object of the present invention is therefore a thermoplastic polyurethane obtainable from a composition (A) comprising

  a) at least one linear polyester polyol having an average hydroxyl value of 10 to 225 mg KOH/g

  b) at least one aliphatic polyol having an average hydroxyl value of 20 to 225 mg KOH/g; and

  c) at least one NCO-terminated compound.

In the context of the present invention, the hydroxyl value is defined as the number of milligrams of potassium hydroxide required to neutralize the acetic acid taken up on acetylation of one gram of the respective sample. The hydroxyl value can be calculated using the following equation. Note that a chemical substance may also have a measurable acid value affecting the measured end point of the titration. The acid value (AV) of the substance, determined in a separate experiment, enters into this equation as a correction factor in the calculation of the hydroxyl value (HV):

$$HV = [[(56.1)(N)(V_B - V_{acet})]/W_{acet}] + AV$$

wherein HV is the hydroxyl value; $V_B$ is the amount (ml) potassium hydroxide solution required for the titration of the blank; $V_{acet}$ is the amount (ml) of potassium hydroxide solution required for the titration of the acetylated sample; $W_{acet}$ is the weight of sample (in grams) used for acetylation; N is the normality of the titrant; 56.1 is the molecular weight of potassium hydroxide; AV is a separately determined acid value of the chemical substance.

It was surprisingly found that adhesive compositions comprising the inventive polyurethane can be employed in a solvent-free state and show good adhesion to a variety of materials, in particular to materials with a low surface energy, especially non-treated surfaces. Non-treated surface as referred to in the present invention refers to surfaces which did not undergo any special treatment to enhance the adhesion on one of the surfaces or between the surfaces.

Surprisingly, the addition of an aliphatic polyol having an average hydroxyl value of 20 to 225 mg KOH/g, led to a significant improvement of the adhesive properties, making the inventive thermoplastic polyurethane suitable for applications in solvent-free adhesives, in particular heat-sealing lacquers.

In a preferred embodiment, the at least one linear polyester polyol present in the composition (A) from which the inventive polyurethane is obtained has an average hydroxyl value of 15 to 125 mg KOH/g, in particular 5 to 65 mg KOH/g,. Preferably, the composition (A) comprises the at least one linear polyester polyol in an amount of 1 to 40 wt.-%, preferably 5 to 25 wt.-%, based in the total weight of composition (A).

In a further preferred embodiment, the at least on aliphatic polyol comprised in the reaction mixture has an average hydroxyl value of 25 to 150 mg KOH/g, in particular 35 to 115 mg KOH/g, . The at least one aliphatic polyol may be saturated or unsaturated. Especially good results with regard to stability of the inventive thermoplastic polyurethane were obtained when a hydrogenated polyol was employed. In a preferred embodiment, the at least one aliphatic polyol is a hydrogenated aliphatic polyol. In an especially preferred embodiment, the at least one aliphatic polyol is a polybutadiene polyol, in particular a hydrogenated polybutadiene polyol.

It was surprisingly found that especially the addition of the at least one aliphatic polyol allows the use of the inventive polyurethane in solvent-free adhesive compositions. In a preferred embodiment, composition (A) therefore comprises the at least one aliphatic polyol in an amount of up to 75 wt.-%, based on the total weight of composition (A). Preferably, composition (A) comprises the at least one aliphatic polyol in an amount of 1 to 70 wt.-%, preferably 2 to 30 wt.-%, based on the total weight of composition (A).

The composition (A) from which the inventive polyurethane is obtainable further comprises at least one NCO-terminated compound. The at least one NCO-terminated compound is preferably present in composition (A) in an amount of 1 to 50 wt.-%, preferably 10 to 30 wt.-%, based on the total weight of composition (A). The at least one NCO-terminated compound is preferably selected from the group consisting of 1,5-naphthylene diisocyanate (NDI), 2,4'- and 4,4'-diphenylmethylene diisocyanate (MDI), isomers of toluylene diisocyanate (TDI), triphenylmethylene triisocyanate (MIT), hydrated triphenylmethylene triisocyanate (H12MDI), tetramethylenexylylene diisocyanate (TMXDI), isophoron diisocyanate (IPDI), xylylene diisocyante (XDI), hexane-1,6-diisocyanate (HDI), pentamethylene diisocyanate (PDI) and dicyclohexylmethane diisocyanate as well as mixtures thereof.

Free isocyanate groups in the polyurethane molecule may cause potential health risk, especially in applications in adhesive composition which are employed in food packaging. The amount of free isocyanate groups (NCO groups) in the inventive polyurethane is therefore preferably less than 0.1 mol-%, especially less than 0.05 mol-%, in particular less than 0.02 mol-%, based on the polyurethane molecule.

In a preferred embodiment, composition (A) from which the inventive polyurethane is obtainable further comprises a chain extender. The chain extender may be used to adapt the mechanical and thermal properties of the inventive polyurethane. In a preferred embodiment, the chain extender is a diol compound, preferably selected from the group consisting of 1,2-propanediol, 1,2-butanediol, 1,3-butanediol, 1,2-pentanediol, 1,3-pentanediol, 1,4-pentanediol, 2-methyl-1,3-propanediol, 2,2,4-trimethyl-1,3-pentanediol, 1,2-hexanediol, 1,3-hexanediol, 1,4-hexanediol, 1,5-hexanediol, 2-ethyl-1,3-hexanediol, 1,2-heptanediol, 1,3-heptanediol, 1,4-heptanediol, 1,5-heptanediol, 1,6-heptanediol, 1,2-octanediol, 1,3-octanediol, 1,4-octanediol, 1,5-octanediol, 1,6-octanediol, 1,7-octanediol, and combinations thereof.

The inventive thermoplastic polyurethane is preferably obtainable by a method comprising the following steps:

i) providing a mixture comprising the at least one linear polyester polyol and the at least one aliphatic polyol

ii) optionally adding at least one chain extender to the mixture of step i); and

iii) adding the at least one NCO-terminated compound to the mixture of step i) or ii).

The thermoplastic polyurethane according to the invention is especially suited for the employment in solvent-free adhesive composition. A further object of the present invention is therefore a solvent-free adhesive composition comprising the thermoplastic polyurethane according to the invention. It was surprisingly found that employment of the inventive thermoplastic polyurethane makes it possible to provide a solvent-free adhesive composition which shows good adhesion properties even when used on non-treated substrates with low surface energy. Apart from saving valuable resources, forgoing of any solvents in the use and application of adhesive composition also allows for a more time and money efficient production process as time and energy consuming evaporation and drying steps can be omitted.

Since the inventive solvent-free adhesive composition is to be employed in the production of food packaging, any potential health risks should be avoided. Therefore, the amount of free NCO-groups in the inventive solvent-free adhesive composition is preferably less than 1 wt.-%, especially 0.005 to 0.05 wt.-%, based on the total weight of the adhesive composition.

The inventive solvent-free adhesive composition may be employed in the form of a 1K-system or a 2K-system. Therefore, in a preferred embodiment, the inventive solvent-free adhesive composition is a 1K-system or a 2K-system.

The inventive solvent-free adhesive composition is especially useful in sealing applications, in particular in the field of food packaging. A further object of the present invention is therefore a method for the production of an article, the method comprising the steps of applying the inventive solvent-free adhesive composition to the surface of a first substrate and connecting the surface of the first substrate to the surface of a second substrate. It was surprisingly found that the inventive adhesive composition can also be applied to non-treated surfaces without deterioration of the adhesion between the two surfaces. Therefore, in a preferred embodiment of the inventive method, at least one of the two surfaces is a non-treated surface, in particular both surfaces.

Another object of the present invention is an object obtainable by the method according to the invention.

A further object is the use of the thermoplastic polyurethane in adhesive compositions, in particular solvent-free adhesive compositions.

Another object of the present invention is the use of a solvent-free composition according to the invention as heat-sealing lacquer, especially in food packaging, pharma and lidding applications.

The present invention will be explained in more detail with references to the following examples which are not to be understood as limiting the spirit of the invention.

Examples:

Thermoplastic polyurethanes according to the invention were prepared as follows, the average molecular weight $M_n$ and the hydroxyl value being determined according to the respective methods described above.

A linear polyester with an average molecular weight $M_n$ of 3700 g/mol and a hydroxyl value of 30 mg KOH/g and a linear polyol having an average molecular weight $M_n$ of 2100 g/mol and a hydroxyl value of 47 mg KOH/g (Polyol) were heated under nitrogen atmosphere. As soon as the polymers were completely melted, MDI as NCO-terminated compound was added. The reaction was terminated when the NCO-content was less than 0.05%, determined according to the method of Spiegelberger (EN ISO 11909).

Different compositions having varying contents of the linear polyol were prepared and the adhesion properties evaluated by applying the obtained thermoplastic polyurethane in an amount of 5 g/m$^2$ to an aluminum substrate. The adhesion properties of the thermoplastic polyurethane were determined 24 hours after sealing against an untreated polypropylene substrate. The compositions as well as the results of the adhesion tests are summarized in Table 1:

Table 1:

| Example | Content Polyol [wt.-%] | Adhesion [N/15 mm]* |
|---|---|---|
| Comp.-Ex. | 0 | 1.1 |
| Example 1 | 7.3 | 4.6 |
| Example 2 | 13.9 | 8.6 |
| *Sealing conditions: Top bar (aluminum film) 150 °C / lower bar 25 °C (PP film)/1s/650N, with sealing apparatus FA. Brugger | | |

As can be seen from the results summarized in Table 1, the inventive thermoplastic polyurethane showed improved adhesion properties when employed as heat-sealing lacquer in comparison to common polyurethanes which do not comprise an aliphatic polyol having an average hydroxyl value within the claimed range.

**Claims**

1. Thermoplastic polyurethane obtainable from a composition (A) comprising

   a) at least one linear polyester polyol having an average hydroxyl value of 10 to 225 mg KOH/g
   b) at least one aliphatic polyol having an average hydroxyl value of 20 to 225 mg KOH/g; and
   c) at least one NCO-terminated compound.

2. Thermoplastic polyurethane according to claim 1, wherein the at least one aliphatic polyol is polybutadiene polyol, preferably a hydrogenated polybutadiene polyol.

3. Thermoplastic polyurethane according to any of claims 1 or 2, wherein composition (A) comprises the at least one linear polyester polyol in an amount of 1 to 40 wt.%, preferably 5 to 25 wt.-%, based on the total weight of composition (A).

4. Thermoplastic polyurethane according to any of the forgoing claims, wherein composition (A) comprises the at least one aliphatic polyol in an amount of 1 to 70 wt.-%, preferably 2 to 30 wt.-%, based on the total weight of composition (A).

5. Thermoplastic polyurethane according to any of the forgoing claims, wherein composition (A) comprises the at least one NCO-terminated compound in an amount of 1 to 50 wt.-%, preferably 10 to 30 wt.-%, based on the total weight of composition (A).

6. Thermoplastic polyurethane according to any of the forgoing claims, wherein the hydroxyl value of the at least one linear polyester polyol is 15 to 125 mg KOH/g, preferably 5 to 65 mg KOH/g.

7. Thermoplastic polyurethane according to any of the forgoing claims, wherein the hydroxyl value of the at least one aliphatic polyol is 25 to 150 mg KOH/g preferably 35 to 115 mg KOH/g.

8. Thermoplastic polyurethane according to any of the forgoing claims, wherein composition (A) further comprises a chain extender, preferably selected from the group consisting of 1,2-propanediol, 1,2-butanediol, 1,3-butanediol, 1,2-pentanediol, 1,3-pentanediol, 1,4-pentanediol, 2-methyl-1,3-propanediol, 2,2,4-trimethyl-1,3-pentanediol, 1,2-hexanediol, 1,3-hexanediol, 1,4-hexanediol, 1,5-hexanediol, 2-ethyl-1,3-hexanediol, 1,2-heptanediol, 1,3-heptanediol, 1,4-heptanediol, 1,5-heptanediol, 1,6-heptanediol, 1,2-octanediol, 1,3-octanediol, 1,4-octanediol, 1,5-octanediol, 1,6-octanediol, 1,7-octanediol, and combinations thereof.

9. Thermoplastic polyurethane according to any of the forgoing claims, wherein the polyurethane is obtainable by a method comprising the steps:

   i) providing a mixture comprising the at least one linear polyester polyol and the at least one aliphatic polyol
   ii) optionally adding at least one chain extender to the mixture of step i); and
   iii) adding the at least one NCO-terminated compound to the mixture of step i) or ii).

10. Solvent-free adhesive composition comprising a thermoplastic polyurethane according to any of claims 1 to 9.

11. Solvent-free adhesive composition according to claim 10, wherein the amount of free NCO-groups in the adhesive composition is less than 1 wt.-%, preferably 0.005 to 0.05 wt.-%, based on the total weight of the adhesive composition.

12. Method for the production of an article, the method comprising the steps of applying a solvent-free adhesive composition according to claims 10 to 11 to the surface of a first substrate and connecting the surface of the first substrate to the surface of a second substrate.

13. Article obtainable according to the method of claim 12.

14. Use of a thermoplastic polyurethane according to any of claims 1 to 9 in adhesive compositions.

15. Use of a solvent-free adhesive composition according to any of claims 10 to 11 as heat-sealing lacquer, especially in food packing, pharma and lidding applications.

Europäisches
Patentamt
European
Patent Office
Office européen
des brevets

# EUROPEAN SEARCH REPORT

Application Number

EP 18 20 6647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/342624 A1 (DÖRR SEBASTIAN [DE] ET AL) 20 November 2014 (2014-11-20) | 1,3-11 | INV. C08G18/62 |
| A | * page 7; example 11 * | 2,12-15 | C08G18/76 C08G18/40 |
| X | US 2009/036630 A1 (SASANO SHIGETOSHI [JP] ET AL) 5 February 2009 (2009-02-05) | 1,2,4-7, 9-15 | C08G18/42 C09J175/06 |
| A | * comparative example 5; page 9 * | 3,8 | |
| X | WO 2017/162529 A1 (BASF SE [DE]) 28 September 2017 (2017-09-28) | 1-14 | |
| A | * page 19; example TPU 2; table 1 * * page 17 * * page 24 * | 15 | |
| X | KR 2012 0026333 A (HWASEUNG T & AMP C CO LTD [KR]) 19 March 2012 (2012-03-19) | 1-14 | |
| A | * page 8, paragraph [0044]; example 1 * | 15 | |
| X | WO 2018/191459 A1 (BASF SE [DE]; NEFF RAYMOND A [US]) 18 October 2018 (2018-10-18) | 1-9 | |
| A | * TPU-1; page 12 - page 13 * | 10-15 | |
| X | US 2017/369624 A1 (ZHAO LIGANG [DE] ET AL) 28 December 2017 (2017-12-28) | 1-14 | |
| A | * page 8; example 5; table 1 * | 15 | |
| X | US 2012/263836 A1 (CARLSON BRIAN W [US] ET AL) 18 October 2012 (2012-10-18) * prepolymer 1; page 7 * * claim 11 * | 1-15 | |

TECHNICAL FIELDS
SEARCHED (IPC)

C08G
C09J

The present search report has been drawn up for all claims

| Place of search | Date of completion of the search | Examiner |
|---|---|---|
| Munich | 14 May 2019 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 653 658 A1

### ANNEX TO THE EUROPEAN SEARCH REPORT
### ON EUROPEAN PATENT APPLICATION NO.

EP 18 20 6647

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2019

| Patent document cited in search report | | Publication date | Patent family member(s) | | Publication date |
|---|---|---|---|---|---|
| US 2014342624 | A1 | 20-11-2014 | CN 103917567 A | | 09-07-2014 |
| | | | EP 2756020 A2 | | 23-07-2014 |
| | | | HK 1199651 A1 | | 10-07-2015 |
| | | | JP 2014534276 A | | 18-12-2014 |
| | | | KR 20140059855 A | | 16-05-2014 |
| | | | US 2014342624 A1 | | 20-11-2014 |
| | | | WO 2013037767 A2 | | 21-03-2013 |
| US 2009036630 | A1 | 05-02-2009 | CN 101351487 A | | 21-01-2009 |
| | | | EP 1970394 A1 | | 17-09-2008 |
| | | | EP 2520598 A2 | | 07-11-2012 |
| | | | JP 4943004 B2 | | 30-05-2012 |
| | | | JP 2007177171 A | | 12-07-2007 |
| | | | KR 20080090470 A | | 08-10-2008 |
| | | | MY 148212 A | | 29-03-2013 |
| | | | US 2009036630 A1 | | 05-02-2009 |
| | | | WO 2007074831 A1 | | 05-07-2007 |
| WO 2017162529 | A1 | 28-09-2017 | BR 112018068332 A2 | | 15-01-2019 |
| | | | CN 108779230 A | | 09-11-2018 |
| | | | EP 3433295 A1 | | 30-01-2019 |
| | | | JP 2019510857 A | | 18-04-2019 |
| | | | KR 20180127645 A | | 29-11-2018 |
| | | | US 2019071535 A1 | | 07-03-2019 |
| | | | WO 2017162529 A1 | | 28-09-2017 |
| KR 20120026333 | A | 19-03-2012 | NONE | | |
| WO 2018191459 | A1 | 18-10-2018 | NONE | | |
| US 2017369624 | A1 | 28-12-2017 | CA 2979108 A1 | | 15-09-2016 |
| | | | CN 107257811 A | | 17-10-2017 |
| | | | EP 3268404 A1 | | 17-01-2018 |
| | | | JP 2018513233 A | | 24-05-2018 |
| | | | KR 20170128419 A | | 22-11-2017 |
| | | | US 2017369624 A1 | | 28-12-2017 |
| | | | WO 2016142515 A1 | | 15-09-2016 |
| US 2012263836 | A1 | 18-10-2012 | AU 2012242949 A1 | | 03-10-2013 |
| | | | BR 112013026588 A2 | | 27-12-2016 |
| | | | CA 2832855 A1 | | 18-10-2012 |
| | | | CN 103502296 A | | 08-01-2014 |
| | | | CO 6801703 A2 | | 29-11-2013 |
| | | | EP 2697278 A1 | | 19-02-2014 |
| | | | JP 6068440 B2 | | 25-01-2017 |
| | | | JP 2014516321 A | | 10-07-2014 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 18 20 6647

14-05-2019

| Patent document cited in search report | Publication date | Patent family member(s) | | Publication date |
|---|---|---|---|---|
| | | MX | 345261 B | 23-01-2017 |
| | | RU | 2013150823 A | 20-05-2015 |
| | | US | 2012263836 A1 | 18-10-2012 |
| | | US | 2014322400 A1 | 30-10-2014 |
| | | WO | 2012142148 A1 | 18-10-2012 |

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2944660 A
- WO 2016026807 A

- WO 2016124499 A